# EUROPEAN PATENT APPLICATION

(11) **EP 3 422 459 A1**
(43) Date of publication of application: **02.01.2019**
(21) Application number: 17177878.0
(22) Date of filing: 26.06.2017
(51) Int. Cl.: H01M 10/0562, H01M 10/42, H01M 2/34, H01M 4/485, H01M 4/525, H01M 10/0525

(54) **RECHARGEABLE ELECTROCHEMICAL CELLS PROTECTED AGAINST THERMAL RUNAWAY**

(71) Applicant: BASF SE, 67056 Ludwigshafen am Rhein (DE); Justus-Liebig-Universität Gießen, 35390 Gießen (DE)
(72) Inventor: KULISCH, Joern, 67056 Ludwigshafen (DE); HARTMANN, Pascal, 67056 Ludwigshafen (DE); TER MAAT, Johan, 67056 Ludwigshafen (DE); JANEK, Juergen, 35392 Giessen (DE); DIETRICH, Christian, 26389 Wilhelmshaven (DE); KOERVER, Raimund, 53819 Neunkirchen-Seelscheid (DE); ZEIER, Wolfgang G., 35041 Marburg (DE)
(74) Representative: BASF IP Association

(57) **Abstract**

The present invention relates to a rechargeable electrochemical cell comprising at least one cell component, which comprises a chemical substance M, which upon heating to a critical temperature T_{c} causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature T_{c} is at least 10, wherein the critical temperature T_{c} is in the range from 100 to 270 °C.

The present invention further relates to an electrode material and a separator each comprising the chemical substance M, to the use of the chemical substance M for preventing a thermal runaway in a rechargeable electrochemical cell and to a process for preventing a thermal runaway of a rechargeable electrochemical cell.

## Description

The present invention relates to a rechargeable electrochemical cell comprising at least one cell component, which comprises a chemical substance M, which upon heating to a critical temperature T_{c} causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature T_{c} is at least 10, wherein the critical temperature T_{c} is in the range from 100 to 270 °C.

The present invention further relates to an electrode material and a separator each comprising the chemical substance M, to the use of the chemical substance M for preventing a thermal runaway in a rechargeable electrochemical cell and to a process for preventing a thermal runaway of a rechargeable electrochemical cell.

Secondary batteries, accumulators or "rechargeable batteries" are just some embodiments by which electrical energy can be stored after generation and used when required. Owing to the significantly better power density, there has been in recent times a move away from the water-based secondary batteries toward development of those batteries in which the charge transport in the electrical cell is accomplished by lithium ions.

However, the energy density of conventional lithium ion accumulators, which have a carbon anode, a cathode based on metal oxides and a non-aqueous electrolyte comprising organic solvents, is limited. New horizons with regard to energy density have been opened up by systems employing a lithium anode such as all-solid-state lithium battery comprising a metallic lithium anode and a solid lithium-ion conducting inorganic electrolyte.

In lithium ion batteries (LiB) and solid-state batteries (SSB), the ionic conduction in the active materials and the electrolyte (liquid and solid, respectively) increases with increasing temperature. With increasing ionic transport, thermal runaways are possible, i.e. the uncontrolled electrochemical charge and discharge behavior that can lead to exothermic decomposition reactions. The occurring heat can then lead to safety issues, fires. Up to now, active cooling is necessary for a battery management to prevent thermal runaway of batteries.

US 9,601,740 B2 discloses a composite porous separator having a shutdown function for a lithium ion battery comprising a non-aqueous electrolyte.

Solid-state batteries (SSB) usually comprise external heat control systems for preventing an undesired heat evolution during charging and discharging the batteries. External heat control systems are not fail-safe in case of external incidents such as a car crash or a fire.

Proceeding from this prior art, an object of the invention was to provide rechargeable electrochemical cells, lithium ion batteries (LiB) as well as solid-state batteries, that do not need an external heat control system to prevent a thermal runaway.

This object is achieved by a rechargeable electrochemical cell comprising at least one cell component, which comprises a chemical substance M, which upon heating to a critical temperature T_{c} causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature T_{c} is at least 10, preferably in the range from 20 to 10¹⁰, more preferably in the range from 10² to 10⁹, in particular in the range from 10³ to 10⁸, wherein the critical temperature T_{c} is in the range from 100 to 270 °C.

Rechargeable electrochemical cells and the corresponding cell components including the respective electroactive materials are known to the person skilled in the art. The rechargeable electrochemical cells of the present invention usually comprise different cell components, such as an anode, which preferably comprises an alkali-metal, in particular lithium, a cathode, a separator, an electrolyte, wires and housing. The charge transport in preferred inventive rechargeable electrochemical cells is accomplished by lithium ions.

The person skilled in the art is aware of suitable electrochemically active cathode materials and suitable electrochemically active anode materials, which are discussed and reviewed in the relevant prior art, e.g. appropriate monographs and reference works.

In the context with the present invention, the electrode where during discharging a net negative charge occurs is called the anode.

Suitable anodes and cathodes are described in detail in WO 2015/086759 A1 on page 10, line 26 to page 14, line 11 wherein said reference is incorporated by reference in its entirety for all useful purposes.

Examples of rechargeable electrochemical cells, wherein the charge transport is accomplished by lithium ions, are lithium ion batteries (LiB), lithium sulfur batteries, lithium air batteries or all-solid state lithium secondary batteries. Preferred rechargeable electrochemical cells are lithium ion batteries or all-solid state lithium secondary batteries, in particular all-solid state lithium secondary batteries.

In one embodiment of the present invention, the rechargeable electrochemical cell is an all-solid state lithium secondary battery.

In one embodiment of the present invention, the rechargeable electrochemical cell is characterized in that the at least one cell component, which comprises the chemical substance M, is selected from the group of cell components consisting of anode, cathode and separator, preferably consisting of cathode and separator.

Anodes as cell components of the inventive rechargeable electrochemical cells comprise as an anode active material preferably lithium in form of metallic lithium, in form of an alloy comprising lithium and at least a metal selected from the group of metals consisting of In, Tl, Sb, Sn and Si, in particular Sn and Si, in the form of an intercalation compound such as Li-graphite or in the form of an ionic compound comprising at least one alkali metal and at least one transition metal, such as lithium titanate (Li₄Ti₅O₁₂).

Cathodes as cell components of the inventive rechargeable electrochemical cells comprise as a cathode active material preferably electroactive materials selected from the group consisting of:
- phosphates with olivine structure such as lithium iron phosphates (LiFePO₄) and lithium manganese phosphate (LiMnPO₄) which can have a stoichiometric or non-stoichiometric composition and which can be doped or not doped, and
- lithium containing transition metal spinels and lithium transition metal oxides with a layered crystal structure such as LiCoO₂, LiNi_{0,5}Mn_{1,5}O_{4-d}, LiMn₂O₄ or NCMs such as Li₁₊ₜNi_{0,33}Co_{0,33}Mn_{0,33}O₂, Li₁₊ₜNi_{0,5}Co_{0,2}Mn_{0,3}O₂, Li₁₊ₜNi_{0,4}Co_{0,3}Mn_{0,4}O₂, Li₁₊ₜNi_{0,4}Co_{0,2}Mn_{0,4}O₂, und Li₁₊ₜNi_{0,45}Co_{0,10}Mn_{0,45}O₂.

In one embodiment of the present invention, inventive rechargeable electrochemical cells can have a disc-like shape. In another embodiment, inventive electrochemical cells can have a prismatic shape.

In one embodiment of the present invention, inventive rechargeable electrochemical cells can include a housing that can be from steel or aluminium.

In one embodiment of the present invention, inventive rechargeable electrochemical cells comprise one or more separators by which the electrodes are mechanically separated from one another. Suitable separators for rechargeable electrochemical comprising organic solvents in the electrolyte are polymer films, especially porous polymer films, which are unreactive toward metallic alkali metal, in particular metallic lithium, and toward the electrolyte in the inventive rechargeable electrochemical cells.

Polyolefin separators, especially of polyethylene or polypropylene, may have a porosity in the range from 35 to 45%. Suitable pore diameters are, for example, in the range from 30 to 500 nm.

In another embodiment of the present invention, the separators selected may be separators composed of PET nonwovens filled with inorganic particles. Such separators may have a porosity in the range from 40 to 55%. Suitable pore diameters are, for example, in the range from 80 to 750 nm.

In case, that the inventive rechargeable electrochemical cells are all-solid state lithium secondary batteries, the anode and the cathode are mechanically separated from one another by a layer comprising a solid electrolyte.

The chemical substance M, which is present in at least one cell component of the inventive rechargeable electrochemical cells, causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature T_{c} is at least 10, preferably in the range from 20 to 10¹⁰, more preferably in the range from 10² to 10⁹, in particular in the range from 10³ to 10⁸, wherein the critical temperature T_{c} is in the range from 100 to 270 °C. The chemical substance M can cause a decrease in ion conductivity by different mechanisms. Preferably the chemical substance M chemically reacts at the critical temperature T_{c} with another chemical compound present in the respective cell component forming a new compound that inhibits ion conductivity or the chemical substance M decomposes at the critical temperature T_{c}. forming one or more decomposition products which inhibit ion conductivity in the cell. More preferably the chemical substance M changes its structure at the critical temperature T_{c} forming a phase with a significantly reduced ion conductivity.

Preferably the chemical substance M is a solid electrolyte. Suitable solid electrolytes undergo a phase transition by heating to a critical temperature T_{c} wherein the solid electrolyte in the initial phase has a much higher ion conductivity than the solid electrolyte in the resulting phase after heat treatment at critical temperature T_{c}. More preferably the chemical substance M is an amorphous solid electrolyte comprising lithium, sulfur and phosphorous, which crystallizes at the critical temperature T_{c} forming a crystalline solid electrolyte showing a lower ion conductivity than the original amorphous solid electrolyte.

Particularly preferred are amorphous LPSX glasses of general formula (I)

(Li₂S)ₓ:(P₂S₅)_{y}:(LiX)_{z} (I)

in which the variables are each defined as follows:
- X: is F, Cl, Br, I, preferably I,
- x: is in the range from 0.3 to 0.9, preferably from 0.35 to 0.8, more preferably from 0.4 to 0.7, even more preferably from 0.45 to 0.55, in particular 0.5,
- y: is in the range from 0.1 to 0.7, preferably from 0.2 to 0.65, more preferably 0.3 to 0.6 even more preferably from 0.45 to 0.55, in particular 0.5
- z: is in the range from 0 to 0.5, preferably from 0 to 0.25, more preferably from 0 to 0.2, even more preferably from 0 to 0.1, in particular 0,
wherein the sum of x+y+z is 1.

In one embodiment of the present invention, the rechargeable electrochemical cell is characterized in that the chemical substance M is a solid electrolyte, preferably an amorphous solid electrolyte, more preferably an amorphous solid electrolyte comprising lithium, sulfur and phosphorous, in particular (Li₂S)₅₀·(P₂S₅)₅₀.

In one embodiment of the of the present invention, the rechargeable electrochemical cell is characterized in that the chemical substance M is an amorphous LPSX glasses of general formula (I)

(Li₂S)ₓ:(P₂S₅)_{y}:(LiX)_{z} (I)

in which the variables are each defined as follows:
X is F, Cl, Br, I, preferably I, x is in the range from 0.3 to 0.9, y is in the range from 0.1 to 0.7, z is in the range from 0 to 0.5 and the sum of x+y+z is 1,
preferably X is F, Cl, Br, I, preferably I, x is in the range from 0.35 to 0.8, y is in the range from 0.2 to 0.65, z is in the range from 0 to 0.25 and the sum of x+y+z is 1,
more preferably X is F, Cl, Br, I, preferably I, x is in the range from 0.4 to 0.7, y is in the range from 0.3 to 0.7, z is in the range from 0 to 0.2 and the sum of x+y+z is 1,
even more preferably X is F, Cl, Br, I, preferably I, x is in the range from 0.45 to 0.55, y is in the range from 0.45 to 0.55, z is in the range from 0 to 0.1 and the sum of x+y+z is 1,
in particular X is F, Cl, Br, I, preferably I, x is 0.5, y is 0.5, z is 0.

The critical temperature T_{c} depends on the nature of the chemical substance M and on the mechanism by which the ion conductivity is decreased. The critical temperature T_{c} is in the range from 100 to 270 °C, preferably in the range from 150 to 265°C, more preferably in the range from 200 to 260 °C, in particular in the range from 220 to 260 °C.

The above-mentioned amorphous LPSX glasses of general formula (I), which are suitable as chemical substance M, have a higher ion conductivity than the corresponding crystallized LPSX compounds.

Amorphous LPSX glasses of general formula (I) LPSX are usually synthesized from Li₂S and P₂S₅ and may contain LiX (LiF, LiCl, LiBr, Lil) additives. The crystallization temperatures of LPSX, which are typically in the range of 200 and 300 °C, may be varied by changing the material composition and by use of composites with other solid electrolyte materials.

In order to ensure a proper protection of the rechargeable electrochemical cell against a thermal runaway the ratio of the ion conductivity at 20 °C of the at least one cell component before heating to the critical temperature T_{c} to the ion conductivity at 20 °C of the at least one cell component after heating to the critical temperature T_{c} is at least 10, preferably the ratio is in the range from 20 to 10¹⁰, more preferably in the range from 10² to 10⁹, in particular in the range from 10³ to 10⁸.

In one embodiment of the present invention, the rechargeable electrochemical cell is characterized in that the ratio of the ion conductivity at 20 °C of the at least one cell component before heating to the critical temperature T_{c} to the ion conductivity at 20 °C of the at least one cell component after heating to the critical temperature T_{c} is in the range from 10² to 10⁹, in particular from 10³ to 108.

In one embodiment of the present invention, the rechargeable electrochemical cell is an all-solid state lithium secondary battery comprising at least one cell component selected from the group of cell components consisting of anode, cathode and separator, wherein said cell component comprises a solid electrolyte, in particular an amorphous solid electrolyte of above-mentioned formula (I), which upon heating to a critical temperature T_{c} in the range from 150 to 265 °C causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature is in the range from 10² to 10⁹, preferably in the range from 10³ to 10⁸.

The mass fraction of the chemical substance M, which is present in at least one cell component of the inventive rechargeable electrochemical cells, in particular in the anode, cathode or separator, can vary in a wide range depending on the function and composition of said cell component. In case that the chemical substance M is a solid electrolyte present in the cathode, the mass fraction of the chemical substance M is usually lower than the mass fraction of the cathode active material. If the chemical substance M is a solid electrolyte present in the separator, which comprises one or more further solid electrolytes, including highly conductive and thermally stable electrolytes, the mass fraction of the chemical substance M can be varied in a broad range depending on the properties of the different solid electrolytes. Preferably the mass fraction of the chemical substance M in the separator is in the range from 0.2 to 1, preferably in the range from 0.6 to 1, more preferably in the range from 0.8 to 1, in particular in the range from 0.85 to 1

In one embodiment of the present invention, the rechargeable electrochemical cell is characterized in that the at least one cell component is a separator, the chemical substance M is an amorphous solid electrolyte, preferably an amorphous LPSX glasses of general formula (I), the critical temperature T_{c} is in the range from 200 to 260 °C, preferably in the range from 220 to 260 °C, and the mass fraction of the chemical substance M in the separator is in the range from 0.2 to 1, preferably in the range from 0.6 to 1, more preferably in the range from 0.8 to 1, in particular in the range from 0.85 to 1.

In another embodiment of the present invention, the rechargeable electrochemical cell is characterized in that the at least one cell component is a cathode, the chemical substance M is an amorphous solid electrolyte, preferably an amorphous LPSX glass of general formula (I), the critical temperature T_{c} is in the range from 200 to 260 °C, preferably in the range from 220 to 260 °C, and the ratio of the mass fraction of the chemical substance M to the mass fraction the cathode active material in the cathode is in the range from 0.001 to 0.5, preferably in the range from 0.005 to 0.45, more preferably in the range from 0.005 to 0.43.

The present invention further provides an electrode material, comprising an electroactive material selected from the group consisting of a cathode active material and an anode active material, in particular a cathode active material, and comprising a chemical substance M, which upon heating to a critical temperature T_{c} causes a decrease of the ion conductivity of the electrode material, wherein the ratio of the ion conductivity at 20 °C of the electrode material before heating to the critical temperature T_{c} to the ion conductivity at 20 °C of the electrode material after heating to the critical temperature T_{c} is at least 10, wherein the critical temperature T_{c} is in the range from 100 to 270 °C.

The description and preferred embodiments of the cathode active material, the anode active material, the chemical substance M, T_{c} and the ratio of the ion conductivity at 20 °C of the electrode material before heating to the critical temperature T_{c} to the ion conductivity at 20 °C of the electrode material after heating to the critical temperature T_{c} correspond to the above description.

The present invention further provides a separator for a rechargeable electrochemical cell comprising a chemical substance M, which upon heating to a critical temperature T_{c} causes a decrease of the ion conductivity of the separator unit, wherein the ratio of the ion conductivity at 20 °C of the separator unit before heating to the critical temperature T_{c} to the ion conductivity at 20 °C of the separator unit after heating to the critical temperature T_{c} is at least 10, wherein the critical temperature T_{c} is in the range from 100 to 270 °C.

The description and preferred embodiments of the rechargeable electrochemical cell, the chemical substance M, T_{c} and the ratio of the ion conductivity at 20 °C of the electrode material before heating to the critical temperature T_{c} to the ion conductivity at 20 °C of the electrode material after heating to the critical temperature T_{c} correspond to the above description.

The present invention further provides the use of a chemical substance M in a rechargeable electrochemical cell for prevention of a thermal runaway of said cell in case of harmful heat evolution in the cell by internal exothermic chemical reactions during charging or discharging the cell, or by external application of heat, wherein said chemical substance M upon heating to a critical temperature T_{c} causes a decrease of the ion conductivity in said rechargeable electrochemical cell, wherein the ratio of the ion conductivity at 20 °C in the rechargeable electrochemical cell before heating to the critical temperature T_{c} to the ion conductivity at 20 °C in the rechargeable electrochemical cell after heating to the critical temperature T_{c} is at least 10, wherein the critical temperature T_{c} is in the range from 100 to 270 °C.

Consequently the present invention further provides a process for preventing a thermal runaway of a rechargeable electrochemical cell in case of harmful heat evolution in the cell by internal exothermic chemical reactions during charging or discharging the cell or by external application of heat by adding a chemical substance M to at least one cell component, wherein said chemical substance M upon heating to a critical temperature T_{c} causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature T_{c} is at least 10, wherein the critical temperature T_{c} is in the range from 100 to 270 °C.

The description and preferred embodiments of the rechargeable electrochemical cell, the chemical substance M, T_{c} and the ratio of the ion conductivity at 20 °C of the electrode material before heating to the critical temperature T_{c} to the ion conductivity at 20 °C of the electrode material after heating to the critical temperature T_{c} correspond to the above description.

The invention is illustrated by the examples which follow, but these do not restrict the invention.

Figures in percent are each based on % by weight, unless explicitly stated otherwise.

### I. Mechanochemical synthesis of (Li₂S)₅₀(P₂S₅)₅₀, (Li₂S)₆₇(P₂S₅)₃₃, (Li₂S)₇₀(P₂S₅)₃₀ glasses

All syntheses were carried out in an argon filled glove box (MBraun). Glass batches of 5 g were made by combining stoichiometric amounts of Li₂S (Sigma Aldrich, 99.98%) and P₂S₅ (Sigma Aldrich, 99%). Mixtures were ball-milled in a Pulverisette 7 Premium Line (Fritsch) planetary ball mill under argon atmosphere at 510 rpm using a ZrO₂ grinding bowl of 45 mL volume and ca. 110 g ZrO₂ balls with a diameter of 3 mm until the glass formation was completed and no reflections were observable by X-ray powder diffraction (XRD). Up to 300 milling cycles were necessary for complete amorphization, while one cycle consisted of periods of 5 min. of milling alternating with 15 min. of resting (for cooling).

### II. Crystallization experiments in hot-press setup

All crystallization experiments were carried out in a home-build apparatus, combining a hydraulic pressing gauge, a DC-operated heating solution and a galvanically decoupled electrochemical cell for electrical impedance (EIS) measurements. Further experimental details are reported by Busche et al. in Chem. Mater. 2016, 28 (17), 6152-6165 (DOI: 10.1021/acs.chemmater. 6b02163). Li₇P₃S₁₁ was prepared by heat-treatment of (Li₂S)₇₀(P₂S₅)₃₀ glass at 250 °C for 4h. (Li₂S)₅₀(P₂S₅)₅₀ and (Li₂S)₆₇(P₂S₅)₃₃ glasses and composites of these glasses and Li₇P₃S₁₁ were heat-treated for one to four hours, while constantly monitoring the resistance changes by EIS measurements. Composites are formed by mixing and grinding (Li₂S)₅₀(P₂S₅)₅₀ or (Li₂S)₆₇(P₂S₅)₃₃ with Li₇P₃S₁₁ in an agate mortar (60 wt% and 15 wt% of Li₇P₃S₁₁, respectively).

### III. Cell assembly

The crystalline solid electrolyte *β*-Li₃PS₄ and lithium titanate Li₄Ti₅O₁₂ powder were provided by BASF SE for these studies. LiCoO₂ (LCO) was commercially obtained from Alfa Aesar (97 %) and prior to use surface coated with a LiNb_{0.5}Ta_{0.5}O₃ (LNTO) film using a sol-gel route as described in Zhang, W.; Weber, D. A.; Weigand, H.; Arlt, T.; Manke, I.; Schröder, D.; Koerver, R.; Hartmann, P.; Zeier, W. G.; Janek, J. Interfacial Processes and Influence of Composite Cathode Microstructure Controlling the Performance of All-Solid-State Lithium Batteries. ACS Appl. Mater. Interfaces, 2017, 9 (21), 17835-45, DOI: 10.1021/acsami.7b01137. The cell casing was manufactured in-house. Cells were assembled following the previously described procedure. 12 mg of a composite cathode powder consisting of coated LCO and (Li₂S)₅₀(P₂S₅)₅₀ in a mass ratio of 70:30 (volume ratio 47:53) were used. The cathode composite was ground in an agate mortar for 15 minutes before assembling the cell. A mass of 60 mg of the *β*-Li₃PS₄ solid electrolyte served as a separator, corresponding to a thickness of ∼ 400 µm. For the negative electrode, 30 mg of a composite of 35 wt% Li₄Ti₅O₁₂, and 65 wt% *β*-Li₃PS₄ as negative electrode (volume ratio 23:77) were used. Powders were compressed uniaxially at 35 kN for 2 minutes, which corresponds to an applied pressure of approx. 445 MPa. During electrochemical experiments, a reduced pressure of approximately 70 MPa was applied.

After the electrochemical characterization, the cell was transferred into a muffle furnace at 250 °C for three hours. After heat treatment, the battery cell was again analyzed by the same electrochemical characterization.

### IV. Electrochemical characterizations

Electrochemical impedance spectroscopy (EIS) and battery cycling were performed using the EC-Lab^{®} Electrochemistry SP300. Measurements were conducted in a frequency range of 7 MHz to 1 Hz applying a 10 mV signal amplitude.
Cells were galvanostatically charged to 3.20 V and discharged to 1.00 V. The potential of the negative anode was assumed to be 1.55 V vs. Li/Li⁺. The cell was cycled at 117 µA (149 µA/cm²) in a temperature controlled environment (25 °C).

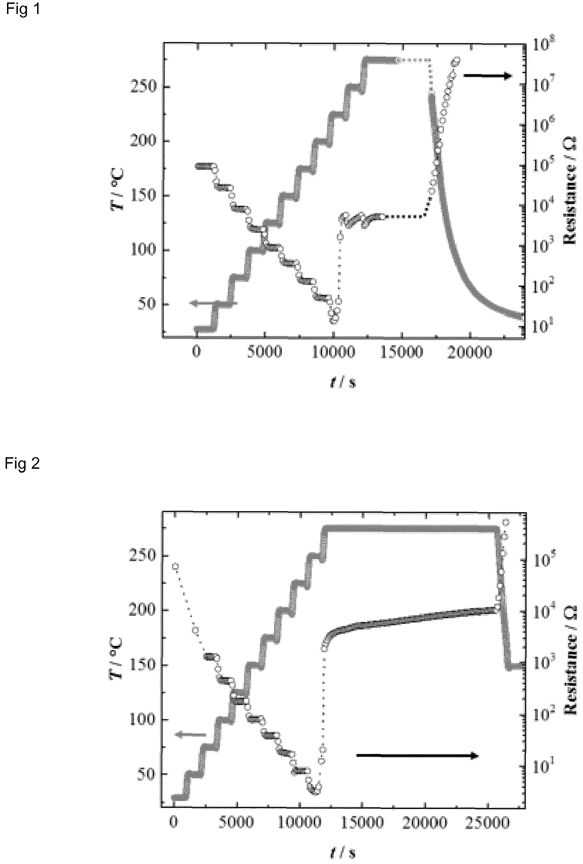

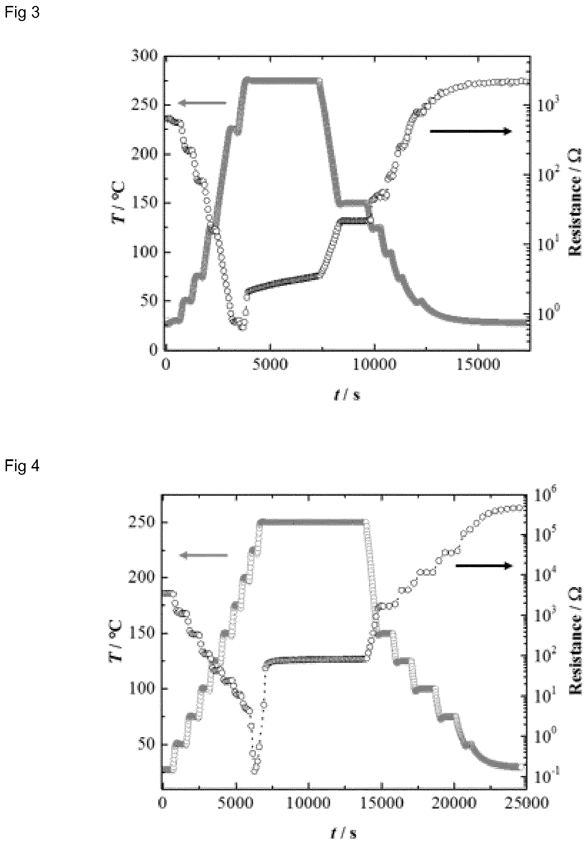

Figures 1 to 4 show for different solid electrolytes during thermal treatment. Table 1 shows the conductivity values before and after the thermal treatment of the solid electrolytes.
Figure 1.: Temperature (grey arrow) dependent change of resistance (black arrow) for the amorphous electrolyte (Li₂S)_{0.5}:(P₂S₅)_{0.5}.
Figure 2.: Temperature (grey arrow) dependent change of resistance (black arrow) for the amorphous electrolyte (Li₂S)_{0.67}:(P₂S₅)_{0.33}.
Figure 3.: Temperature (grey arrow) dependent change of resistance (black arrow) for a mixture consisting of 40% of the amorphous electrolyte (Li₂S)_{0.5}:(P₂S₅)_{0.5} and 60% of the crystalline electrolyte Li₇P₃S₁₁.
Figure 4.: Temperature (grey arrow) dependent change of resistance (black arrow) for a mixture consisting of 85% of the amorphous electrolyte (Li₂S)_{0.67}:(P₂S₅)_{0.33} and 15% of the crystalline electrolyte Li₇P₃S₁₁.

**Table 1: Ionic conductivity at 20 °C before and after heating to a critical temperature T_{c}**

| Figure | Sample | "Conductivity before" [S/cm] | "Conductivity after" [S/cm] | Ratio of "Conductivity before" to "Conductivity after" |
|---|---|---|---|---|
| 1 | (Li₂S)_{0.5}:(P₂S₅)_{0.5} | 1 x 10⁻⁶ | 1 x 10⁻¹⁰ | 10⁴ |
| 2 | (Li₂S)_{0.67}:(P₂S₅)_{0.33} | 4 x 10⁻⁵ | 1 x 10⁻¹⁰ | 4 x 10⁵ |
| 3 | 40% (Li₂S)_{0.5}:(P₂S₅)_{0.5} / 60% Li₇P₃S₁₁ | 2 x 10⁻⁴ | 2 x 10⁻⁵ | 10¹ |
| 4 | 85% (Li₂S)_{0.67}:(P₂S₅)_{0.33} / 15% Li₇P₃S₁₁ | 4 x 10⁻⁵ | 6 x 10⁻⁸ | 6.66 x 10² |

## Claims

1. A rechargeable electrochemical cell comprising at least one cell component, which comprises a chemical substance M, which upon heating to a critical temperature T_{c} causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature T_{c} is at least 10, wherein the critical temperature T_{c} is in the range from 100 to 270 °C.

2. The rechargeable electrochemical cell according to claim 1, wherein the rechargeable electrochemical cell is an all-solid state lithium secondary battery.

3. The rechargeable electrochemical cell according to claim 1 or 2, wherein the at least one cell component is selected from the group of cell components consisting of anode, cathode and separator.

4. The rechargeable electrochemical cell according to any of claims 1 to 3, wherein the chemical substance M is a solid electrolyte.

5. The rechargeable electrochemical cell according to any of claims 1 to 4, wherein the ratio of the ion conductivity at 20 °C of the at least one cell component before heating to the critical temperature T_{c} to the ion conductivity at 20 °C of the at least one cell component after heating to the critical temperature T_{c} is in the range from 20 to 10¹⁰.

6. The rechargeable electrochemical cell according to any of claims 1 to 5, wherein the at least one cell component is a separator, the chemical substance M is an amorphous solid electrolyte, the critical temperature T_{c} is in the range from 200 to 260 °C and the mass fraction of the chemical substance M in the separator is in the range from 0.2 to 1.

7. Electrode material, comprising an electroactive material selected from the group consisting of a cathode active material and an anode active material, in particular a cathode active material, and comprising a chemical substance M, which upon heating to a critical temperature T_{c} causes a decrease of the ion conductivity of the electrode material, wherein the ratio of the ion conductivity at 20 °C of the electrode material before heating to the critical temperature T_{c} to the ion conductivity at 20 °C of the electrode material after heating to the critical temperature T_{c} is at least 10, wherein the critical temperature T_{c} is in the range from 100 to 270 °C.

8. Separator for a rechargeable electrochemical cell comprising a chemical substance M, which upon heating to a critical temperature T_{c} causes a decrease of the ion conductivity of the separator unit, wherein the ratio of the ion conductivity at 20 °C of the separator unit before heating to the critical temperature T_{c} to the ion conductivity at 20 °C of the separator unit after heating to the critical temperature T_{c} is at least 10, wherein the critical temperature T_{c} is in the range from 100 to 270 °C.

9. Use of a chemical substance M in a rechargeable electrochemical cell for prevention of a thermal runaway of said cell in case of harmful heat evolution in the cell by internal exothermic chemical reactions during charging or discharging the cell, or by external application of heat, wherein said chemical substance M upon heating to a critical temperature T_{c} causes a decrease of the ion conductivity in said rechargeable electrochemical cell, wherein the ratio of the ion conductivity at 20 °C in the rechargeable electrochemical cell before heating to the critical temperature T_{c} to the ion conductivity at 20 °C in the rechargeable electrochemical cell after heating to the critical temperature T_{c} is at least 10, wherein the critical temperature T_{c} is in the range from 100 to 270 °C.

10. Process for preventing a thermal runaway of a rechargeable electrochemical cell in case of harmful heat evolution in the cell by internal exothermic chemical reactions during charging or discharging the cell or by external application of heat by adding a chemical substance M to at least one cell component, wherein said chemical substance M upon heating to a critical temperature T_{c} causes a decrease of the ion conductivity of the at least one cell component, wherein the ratio of the ion conductivity at 20 °C of the at least one cell component before heating to the critical temperature T_{c} to the ion conductivity at 20 °C of the at least one cell component after heating to the critical temperature T_{c} is at least 10, wherein the critical temperature T_{c} is in the range from 100 to 270 °C.
